# EUROPEAN PATENT SPECIFICATION

(11) **EP 1 570 576 B1**
(45) Date of publication and mention of the grant of the patent: **18.05.2011**
(21) Application number: 03776059.2
(22) Date of filing: 05.12.2003
(51) Int. Cl.: H04L 12/28

(54) **METHOD FOR SETTING HOME CODE OF HOME NETWORK SYSTEM**
VERFAHREN ZUR EINSTELLUNG DES HOMECODES EINES HOME-NETZSYSTEMS
PROCEDE DE REGLAGE DE CODE DE BUREAU LOCAL D'UN SYSTEME DE RESEAU LOCAL

(30) Priority: 06.12.2002 KR 2002077316
(43) Date of publication of application: 07.09.2005
(73) Proprietor: LG Electronics, Inc., Seoul 150-721 (KR)
(72) Inventor: LEE, Koon Seok, Changwon-si, 641-010 Gyeongsangnam-do (KR); KIM, Yong Tae, Gimhae-si, 621-830 Gyeongsangnam-do (KR); BAEK, Seung Myun, 641-180 Gyeongsangnam-do (KR)
(74) Representative: Bryn-Jacobsen, Caelia
(86) International application number: PCT/KR2003/002669
(87) International publication number: WO 2004/054110

(56) References cited:
- WO-A1-03/084143
- US-A1- 2003 043 028

## Description

### TECHNICAL FIELD

The present invention relates to a home network system, and more particularly, to a method for setting a home code of a home network system.

### BACKGROUND ART

In a home network system, various home appliances, that is, a plurality of electronic home appliances of a personal computer, a portable phone, a refrigerator, a washing machine, an electronic oven and the like are connected with one another and controlled through one network.

In the home network system, a main appliance connected with each of the appliances through the home network is required so as to connect and control various home appliances. In addition, home networking can be realized only under environment where a protocol to control various signals using one integrated signal is provided on a communication bus such that one main appliance controls all peripheral home appliances, and a user should be allowed to see each appliance motion and recognize its current operation state.

However, the above-described conventional home network system has a drawback in that since networks used in the respective homes is connected by the same communication line adjacent networks equipped with the same appliance may influence one another.

In other words, when two adjacent homes A and B are respectively networked with a refrigerator, a washing machine, an air conditioner, an electronic oven, a personal computer (PC) and the like, their networks are connected by a communication bus being one line.

Accordingly, if a user transmits an execution code value and a code value of the washing machine to the washing machine through the PC so as to allow the washing machine of the home A to be in operation, the washing machine of the home A is operated according to the execution code value. However, there may be caused a problem in that the execution code value is transmitted even to the home B via the communication bus to thereby permit the washing machine of the home B to be operated unnecessarily.

Further, even though the appliance of the home A is operated by wireless communication, the appliance of the adjacent home B located within an effective radius of a wireless signal is also operated together.

Accordingly, in order to solve the above drawbacks, it is essential that the home code be set in the home network system. Home code setting has been made in a manner where a master refers to home code management data for manual input at the time of setting-up of the home network.

However, in case the master refers to the data for manual input, the home code can be not only recognized to the master, but also it can be also exposed to a third party. For example, in case the third party recognizes the home code of a corresponding home, a crime prevention system can be released or an admission door can be opened.

### DISCLOSURE OF THE INVENTION

Accordingly, the present invention is directed to a method for setting a home code of a home network system that substantially obviate one or more of the problems due to limitations and disadvantages of the related art.

An object of the present invention is to provide a method for setting a home code of a home network system in which the home code can be set only with simple key input, and home code setting and managing can be perfectly secured.

Additional features and advantages of the invention will be set forth in the description which follows, and in part will be apparent from the description, or may be learned by practice of the invention. The objectives and other advantages of the invention will be realized and attained by the structure particularly pointed out in the written description and claims thereof as well as the appended drawings.

The invention is set out in independent claims. Some optional features are set out in the claims dependent thereto. According to one aspect there is a method for setting a home code of a home network system, the method including the steps of creating the home code of the first adaptor; determining whether or not the home code is duplicated; and if the home code is not duplicated, setting the home code of the first adaptor to the second adaptors.

Herein, the determining step includes the steps of transmitting a request packet from the network managing unit to the first adaptor; adding the home code of the first adaptor to the request packet; transmitting the request packet having the home code to other networks by wireless or through the power line; and determining that the home code is not duplicated in case there is no response signal to the request packet, and determining that the home code is duplicated in case there is the response signal to the request packet.

To further achieve these and other advantages and in accordance with the purpose of the present invention, there is provided a method for setting a home code of a home network system, the method including the steps of: transmitting a home code create command to the first adaptor from the network managing unit according to a user's command; creating a home code according to the home code create command at the first adaptor; determining whether or not the home code is duplicated by the first adaptor; if the home code is not duplicated, transmitting a home code setting command from the network managing unit to the first adaptor; and setting the home code of the second adaptors according to the home code setting command at the first adaptor.

Herein, the home code setting step includes the steps of: annexing the home code of the first adaptor to a head of the home code setting command; transmitting the home code setting command having the home code to the second adaptors; and setting the home code annexed to the head of the home code setting command to the home code of the second adaptors.

It is to be understood that both the foregoing general description and the following detailed description are exemplary and explanatory and are intended to provide further explanation of the invention as claimed.

EP 1244326 relates to a plurality of terminals (10, 20, 30) which are connected by a power line (1) and exchange information through the power line (1) and to which intrinsic terminal identifiers are respectively given, and the feature is that each of the terminals (10, 20, 30) holds a house code to prevent interference between another system and its own system, and the house code is generated as a code common to the same system on the basis of the terminal identifier given to a master terminal selected from the respective terminals (10, 20, 30) belonging to the same system.

WO 02/071644 relates to a power line communication device wherein a home code or a device address of each device can be set or changed automatically or easily by oneself by a user upon installation of the device and the set or changed contents can be informed to the other devices upon installing the device. The power line communication device can communicate with at least one external device through the power line, and performs processes of searching, changing and informing the address through the Hail communication performed by a program. The power line coupler couples a signal transmitting and receiving means with the power, and the signal transmitting and receiving means transmits and receives signals through the power line via the power line coupler. A controlling means controls the signal transmitting and receiving means. A storing means stores program codes for driving the controlling means. The program codes according to the present invention comprises a device code managing means for searching a device so as not to be overlapped with the device code of the external device. In addition, the program codes may further comprise a home code managing means for searching a home code of the external device, and setting it as an own home code.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a block diagram illustrating a construction of a home network system according to the present invention; and
FIG. 2 is a flow chart illustrating a method for setting a home code of a home network system according to the present invention.

### BEST MODE FOR CARRYING OUT THE INVENTION

Reference will now be made in detail to the preferred embodiments of the present invention, examples of which are illustrated in the accompanying drawings.

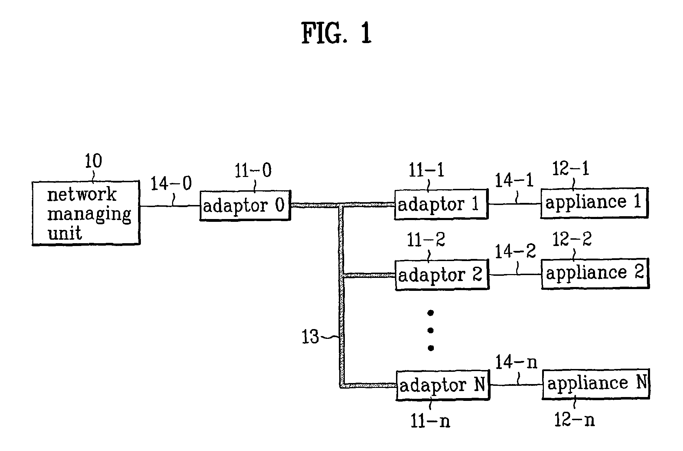

FIG. 1 is a block diagram illustrating a construction of a home network system according to the present invention.

As shown in FIG. 1, the home network system according to the present invention includes a plurality of appliances 12-1 to 12-n disposed at a home such as an electric home appliance and the like; and a network managing unit 10 having a program and a user interface for managing the plurality of appliances 12-1 to 12-n.

Herein, the appliances 12-1 to 12-n are respectively connected with adaptors 11-1 to 11-n through serial interfaces 14-1 to 14-n. The network managing unit 10 is also connected with the adaptors 11-1 to 11-n through a serial interface 14-0 and is connected with other home networks through a communication bus. The adaptors 11-1 to 11-n can be embedded into or externally installed at the appliances 12-1 to 12-n, and the adaptor 11-0 can be also embedded into or externally installed at the network managing unit 10. Additionally, the adaptors 11-1 to 11-n and the adaptor 11-0 are connected with one another through a power line 13.

The network managing unit 10 is a device only for a personal computer or a network. The adaptors 11-0 to 11-n are power line carrier (PLC) modems or wireless modems, and have a default value '0x00000000' of the home code at the time of initial shipment.

The present invention is based on a principle as below so as to allow a simple and convenient setting and a perfect security of the home code. That is, the home code cannot be detected by a user or a master, the home code value cannot be detected through the power line, and the home code is just only created, set and managed only at the adaptor 11-0 connected with the network managing unit 10 and is not known to the network managing unit 10.

The adaptors 11-0 to 11-n receive data through the serial interfaces 14-0 to 14-n and process the received data in itself according to need, without transmitting to the power line 13. Further, data received through the power line 13 is not transmitted to the serial interfaces 14-0 to 14-n.

Further, since the home code can be expressed as many as four bytes (32bits), that is, as many as 2³², a unique value can be provided for 4,294,967,295 homes.

However, since power line communication does not actually get out of a predetermined range, that is, from a range of one hundred meter radius due to a limited range of signal transmission, the home located within the range of one hundred meter radius actually has one of the numbers of four bytes that is set as the home code.

The method for setting the home code of the home network system according to the present invention is described as follows.

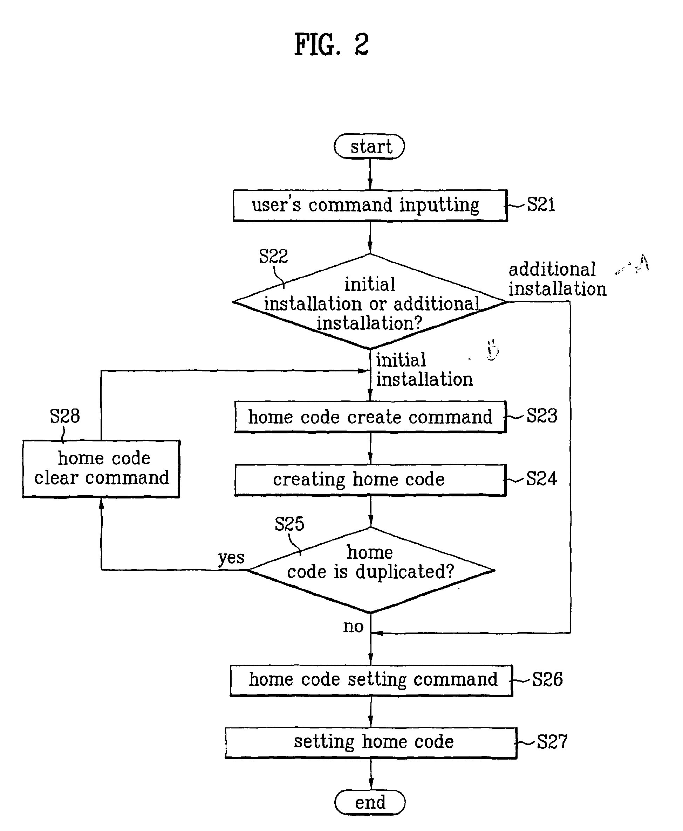

FIG. 2 is a flow chart illustrating the method for setting the home code of the home network system according to the present invention.

As shown in FIG. 2, firstly, if the home network system is powered-on, the user commands the network managing unit 10 to set the home code of the home network system through the user interface (S21).

After that, the network managing unit 10 recognizes a user's command to determine whether the appliances 12-1 to 12-n are initially installed or, the home code is already set to each of the appliances and then a new appliance is additionally installed (S22). For this, the network managing unit 10 confirms at initial booting whether or not the appliance is already connected to the network managing unit 10. If the appliance is already connected, it is determined to be an additional installation, and if the appliance is not connected, it is determined to be an initial installation.

In the step S22, if it is determined to be the initial installation, the network managing unit 10 commands the adaptor 11-0 connected to itself to create the home code (S23). At this time, the network managing unit 10 transmits a "home code create command" packet to the adaptor 11-0 through the serial interface 14-0 (S23).

Additionally, the adaptor 11-0 receiving the home code create command randomly creates the home code of itself (S24). Herein, the method for creating the home code can be proposed severally. Firstly, a method of combining a timing count value and an arbitrary value is proposed. The timing count value is timing information included in the home code create command packet or a count value of a timer included in the adaptor 11-0, and the arbitrary value is an initial code that is given to the adaptor 11-0 when the adaptor 11-0 is produced. In a second method for creating the home code, a random number generator can be used to create the home code. The home code created in the above methods has four bytes.

Next, the network managing unit 10 confirms whether or not the home code created at the adaptor 11-0 is already used in other home adaptors or appliances. That is, it is determined whether or not the home code of the adaptor 11-0 is duplicated (S25). For this, after the home code is created at the adaptor 11-0, the network managing unit 10 transmits a request packet requesting a response, to other home networks through the power line 13. At this time, the adaptor 11-0 adds the home code of itself to the request packet transmitted by the network managing unit 10. In case the adaptor 11-0 is the wireless modem, the request packet is transmitted to other home networks by wireless.

Additionally, responses of other home adaptors or appliances to the request packet are waited for a predetermined time, that is, for three seconds. If there are not the responses of other network adaptors or appliances, the network managing unit 10 retransmits the request packet to the power line 13 three times more. This is an initial installation procedure in a state where the home code is not set to the adaptors 11-1 to 11-n and the appliances 12-1 to 12-n of a user's home. Therefore, the adaptors 11-1 to 11-n and the appliances 12-1 to 12-n cannot respond to the request packet.

If there is no response after three times transmission of the request packet, it is determined that a currently created home code of the adaptor 11-0 is not used in other home networks. After the network managing unit 10 confirms that there is no response from other home adaptors or appliances, it transmits a "home code setting command" packet to the adaptor 11-0 (S26). The adaptor 11-0 receiving the home code setting command sets the created home code as the home code of itself, and annexes the home code of the adaptor 11-0 itself to a head of the home code setting command. Additionally, in order to set the home code to the adaptors 11-1 to 11-n, the home code setting command including the home code is transmitted to the adaptors 11-1 to 11-n (S27). Next, the adaptors 11-1 to 11-n set the home code existing at the head of the home code setting command, as the home code of itself. Accordingly, the same home code is set to the adaptors 11-0 to 11-n.

If there are responses of other home adaptors or appliances through the power line 13 or by wireless in the step S25, the network managing unit 10 determines that the home code of the adaptor 11-0 is already in use. At this time, the network managing unit 10 transmits a "home code clear command" packet to the adaptor 11-0 so as to delete the home code of the adaptor 11-0 (S28). After that, the home code creating step is resumed therefrom (S23).

If it is determined that the new appliance is additionally installed in the step S22, the network managing unit 10 transmits the "home code setting command" packet to the adaptor 11-0 (S26). Additionally, the adaptor 11-0 receiving the home code setting command transmits the home code setting command including the home code of the adaptor 11-0 to the new adaptor so as to set the home code to the new adaptor connected to the new appliance (S27). Accordingly, the home code being the same as that of the adaptors 11-0 to 11-n is set to the new adaptor.

If the home code is once set through the above-described procedure, the home code is limited in change and read. This is because in case the home code can be changed, the third party can use an application program to cause a home code change such that the third party can detect it.

However, since there is also the case where the home code change is required, for example, only a development department or a service center for the home network system is limitedly allowed to change and read the home code. Limitedly, the change and read of the home code is briefly described in the following.

The home code of the adaptor 11-0 connected to the network managing unit 10 can be changed by the home code clear command (S28), but since the command is not transmitted through the power line 13, the home code of the adaptors 11-1 to 11-n connected to the appliances 12-1 to 12-n cannot be changed.

In case the adaptors 11-1 to 11-n are embedded into the appliances 12-1 to 12-n, the home code setting can be achieved using the home code change command so as to reset the home code when the appliance is moved between the networks. For this, only the adaptor 11-0 connected to the network managing unit 10 can transmit the home code change command through the power line 13.

Next, the home code can be read only through the above-described adaptor 11-0 only for service. That is, when data is transmitted to the appliances 12-1 to 12-n, the general adaptors 11-1 to 11-n transmit only data to the appliances 12-1 to 12-n, but the adaptor 11-0 only for service can receive data including the home code from the appliances 12-1 to 12-n.

### INDUSTRIAL APPLICABILITY

As described above, in the home code setting method of the home network system according to the present invention, a complicated procedure for setting the home code is not required, and the home code can be automatically created and set at the adaptor itself only with user's simple command input. Further, there is an effect that the security is perfectly guaranteed since information on the home code cannot be accessed from an external as well as information on the created home code is not leaked to the external.

While the present invention has been described and illustrated herein with reference to the preferred embodiments thereof, it will be apparent to those skilled in the art that various modifications and variations can be made therein without departing from the scope of the invention. Thus, it is intended that the present invention covers the modifications and variations of this invention that come within the scope of the appended claims and their equivalents.

## Claims

1. A method for setting a home code of a home network system having a first connecting device connected with a network managing unit, and second connecting device connected to the first connecting device through a power line or by wireless and connected with each of appliances, the method performed by the network managing unit, and the method comprising the steps of:
a) transmitting a home code create command to the first connecting device from the network managing unit according to a user's command;
wherein the first connecting device creates a home code (S24) according to the home code create command
b) determining (S25) by the network managing unit whether or not the home code is duplicated in other network by :
b1) transmitting a request packet requesting a response,
b3) determining at the network managing unit that the home code is not duplicated when there is no response signal to the request packet and that the home code is duplicated when there is a response to the request packet,
c) the managing unit requesting (s26) the first connecting device to set the created home code to the second connecting devices when the home code is determined not to be duplicated.

2. The method of claim 1,
wherein the home code of the first connecting device is created by combining a timing count value and an initial code value of the first connecting device.

3. The method of claim 1,
wherein if the home code is duplicated, the home code created by the first connecting device is deleted.

4. The method of claim 1,
wherein the network managing unit receives a user command through a user interface, and generates the request packet in response to the user command.

5. The method of claim 1,
further comprising determining whether the appliance is initially installed or additionally installed, before the request packet is transmitted; wherein the home code of the first connecting device is created by combining a timing count value and an initial code value of the first connecting device.

6. The method of claim 1,
wherein the first connecting device, for setting the home code to the second connecting device, configured to:
annex the home code of the first adaptor to a head of the home code setting command; and
transmit the home code setting command having the ho code to the second connecting device, wherein the second connecting devices set the home code annexed to the head of the home code setting command as the home code of the second connecting device.

7. The method of claim 1, wherein the first connecting device includes at least one of a power line carrier modem and a wireless modem.

8. The method of claim 1, wherein the second connecting device includes at least one of a power line carrier modem and a wireless modem.

9. The method of claim 1, wherein the first connecting device and the second connecting device connect one transmission medium to other transmission medium.

## Patentansprüche

1. Verfahren zum Einstellen eines Hauscodes eines Heimnetzwerksystems mit einer ersten Verbindungsvorrichtung, die mit einer Netzwerkverwaltungseinheit verbunden ist, und einer zweiten Verbindungsvorrichtung, die mit der ersten Verbindungsvorrichtung über eine Stromleitung oder drahtlos verbunden ist und mit jeder Anwendung verbunden ist, wobei das Verfahren von der Netzwerkverwaltungseinheit durchgeführt wird und das Verfahren die folgenden Schritte umfasst:
a) Übertragen einer Anweisung für das Erstellen eines Hauscodes von der Netzwerkverwaltungseinheit an die erste Verbindungsvorrichtung gemäß der Anweisung eines Benutzers; wobei die erste Verbindungsvorrichtung einen Hauscode (S24) gemäß der Anweisung für das Erstellen eines Hauscodes erstellt,
b) Bestimmen (D25) durch die Netzwerkverwaltungseinheit, ob in einem anderen Netzwerk ein Duplikat des Hauscodes besteht oder nicht, mittels:
b1) Übertragen eines Anfragepakets, das um eine Antwort ersucht,
b2) Bestimmen durch die Netzwerkverwaltungseinheit, dass kein Duplikat des Hauscodes besteht, wenn es kein Antwortsignal auf das Anfragepaket gibt, und dass ein Duplikat des Hauscodes besteht, wenn es eine Antwort auf das Anfragepaket gibt;
c) Ansuchen (S26) an die erste Verbindungsvorrichtung durch die Verwaltungseinheit, den erstellten Hauscode in der zweiten Verbindungsvorrichtung einzustellen, wenn bestimmt wurde, dass es kein Duplikat des Hauscodes gibt.

2. Verfahren nach Anspruch 1, wobei der Hauscode der ersten Verbindungsvorrichtung erstellt wird, indem ein timing-bezogener Zahlenwert und ein ursprünglicher Codewert der ersten Verbindungsvorrichtung kombiniert werden.

3. Verfahren nach Anspruch 1, wobei der Hauscode, der von der ersten Verbindungsvorrichtung erstellt wurde, gelöscht wird, wenn es ein Duplikat des Hauscodes gibt.

4. Verfahren nach Anspruch 1, wobei die Netzwerkverwaltungseinheit durch ein Benutzerinterface eine Benutzeranweisung erhält und das Anfragepaket der Benutzeranweisung folgend erstellt.

5. Verfahren nach Anspruch 1, des Weiteren umfassend das Bestimmen, ob die Anwendung ursprünglich installiert oder zusätzlich installiert ist, bevor das Anfragepaket übertragen wird; wobei der Hauscode der ersten Verbindungsvorrichtung durch das Kombinieren eines timing-bezogenen Zahlenwerts und eines ursprünglichen Codewerts der ersten Verbindungsvorrichtung erstellt wird.

6. Verfahren nach Anspruch 1, wobei die erste Verbindungsvorrichtung für das Einstellen des Hauscodes in der zweiten Verbindungsvorrichtung konfiguriert ist:
den Hauscode des ersten Adapters an einen Head der Anweisung für das Einstellen des Hauscodes anzuhängen; und
die Anweisung für das Einstellen des Hauscodes mit dem Hauscode an die zweite Verbindungsvorrichtung zu übertagen,
wobei die zweite Verbindungsvorrichtung den Hauscode, der an den Head der Anweisung für das Einstellen des Hauscodes angehängt ist, als Hauscode der zweiten Verbindungsvorrichtung einstellt.

7. Verfahren nach Anspruch 1, wobei die erste Verbindungsvorrichtung zumindest eines von einem TFH-Modem und einem Drahtlosmodem enthält.

8. Verfahren nach Anspruch 1, wobei die zweite Verbindungsvorrichtung zumindest eines von einem TFH-Modem und einem Drahtlosmodem enthält.

9. Verfahren nach Anspruch 1, wobei die erste Verbindungsvorrichtung und die zweite Verbindungsvorrichtung ein Übertragungsmedium mit dem anderen Übertragungsmedium verbinden.

## Revendications

1. Procédé de réglage d'un code de bureau local d'un système de réseau local ayant un premier dispositif de connexion connecté à une unité de gestion de réseau, et un second dispositif de connexion connecté au premier dispositif de connexion par le biais d'une ligne électrique ou sans fil et connecté à chacun d'appareils, le procédé étant effectué par l'unité de gestion de réseau, et le procédé comprenant les étapes consistant à :
a) transmettre une commande de création de code de bureau local de l'unité de gestion de réseau au premier dispositif de connexion en fonction d'une commande d'un utilisateur ;
dans lequel le premier dispositif de connexion crée un code de bureau local (S24) en fonction de la commande de création de code de bureau local ;
b) déterminer (S25) par l'unité de gestion de réseau si le code de bureau local est dupliqué ou pas dans un autre réseau en :
b1) transmettant un paquet de demande demandant une réponse,
b3) déterminant au niveau de l'unité de gestion de réseau que le code de bureau local n'est pas dupliqué lorsqu'il n'y a pas de signal de réponse au paquet de demande et que le code de bureau local est dupliqué lorsqu'il y a une réponse au paquet de demande,
c) demander par l'unité de gestion (S26) au premier dispositif de connexion de régler le code de bureau local créé sur le second dispositif de connexion lorsqu'il est déterminé que le code de bureau local n'est pas dupliqué.

2. Procédé selon la revendication 1,
dans lequel le code de bureau local du premier dispositif de connexion est créé en combinant une valeur de compte de timing et une valeur de code initiale du premier dispositif de connexion.

3. Procédé selon la revendication 1,
dans lequel, si le code de bureau local est dupliqué, le code de bureau local créé par le premier dispositif de connexion est supprimé.

4. Procédé selon la revendication 1,
dans lequel l'unité de gestion de réseau reçoit une commande d'utilisateur à travers une interface utilisateur, et génère le paquet de demande en réponse à la commande d'utilisateur.

5. Procédé selon la revendication 1,
consistant en outre à déterminer si l'appareil est installé initialement ou en complément, avant la transmission du paquet de demande ; dans lequel le code de bureau local du premier dispositif de connexion est créé en combinant une valeur de compte de timing et une valeur de code initiale du premier dispositif de connexion.

6. Procédé selon la revendication 1,
dans lequel le premier dispositif de connexion, pour régler le code de bureau local sur le second dispositif de connexion, est configuré pour :
annexer le code de bureau local du premier adaptateur à un en-tête de la commande de réglage de code de bureau local ; et
transmettre la commande de réglage de code de bureau local ayant le code de bureau local au second dispositif de connexion, dans lequel le second dispositif de connexion règle le code de bureau local annexé à l'en-tête de la commande de réglage de code de bureau local en tant que code de bureau local du second dispositif de connexion.

7. Procédé selon la revendication 1, dans lequel le premier dispositif de connexion comprend au moins l'un d'un modem à porteuse de ligne électrique et d'un modem sans fil.

8. Procédé selon la revendication 1, dans lequel le second dispositif de connexion comprend au moins l'un d'un modem à porteuse de ligne électrique et d'un modem sans fil.

9. Procédé selon la revendication 1, dans lequel le premier dispositif de connexion et le second dispositif de connexion connectent un support de transmission à un autre support de transmission.
